# EUROPEAN PATENT APPLICATION

(11) **EP 4 411 890 A1**
(43) Date of publication of application: **07.08.2024**
(21) Application number: 23821857.2
(22) Date of filing: 30.08.2023
(51) Int. Cl.: H01M 4/525, H01M 4/505

(54) **NICKEL-RICH LAYERED OXIDE MATERIAL, AND PREPARATION METHOD THEREFOR AND USE THEREOF**

(30) Priority: 20.12.2022 CN 202211638989
(71) Applicant: Tianjin B&M Science And Technology Co., Ltd., Tianjin 300384 (CN)
(72) Inventor: LI, Honglei, Binhai New Area Tianjin 300384 (CN); TANG, Miao, Binhai New Area Tianjin 300384 (CN); ZHANG, Haitian, Binhai New Area Tianjin 300384 (CN); JI, Changyin, Binhai New Area Tianjin 300384 (CN); LV, Fei, Binhai New Area Tianjin 300384 (CN); XU, Ning, Binhai New Area Tianjin 300384 (CN)
(74) Representative: Gill Jennings & Every LLP
(86) International application number: PCT/CN2023/115761
(87) International publication number: WO 2024/131123

(57) **Abstract**

The present application provides a nickel-rich layered oxide material, a preparation method and an application thereof. The nickel-rich layered oxide material provided in the present application has a crystal structure with a hexagonal space group R-3m and a lattice microstrain of ≤0.25%.

## Description

### CROSS-REFERENCE TO RELATED APPLICATIONS

This application claims priority to Chinese patent application No. 202211638989.X, filed on December 20, 2022, and titled "NICKEL-RICH LAYERED OXIDE MATERIAL, AND PREPARATION METHOD AND APPLICATION THEREOF", the content of which is hereby incorporated by reference in its entirety.

### TECHNICAL FIELD

The present application relates to the field of battery materials, and in particular to a nickel-rich layered oxide material, and a preparation method and an application thereof.

### BACKGROUND

In recent years, the rapid development of new energy vehicles has raised higher requirements for the energy density, the cycle life, and the power density of the lithium secondary battery. The cathode material is a key factor for breakthrough in the performance of the lithium secondary battery. LiNiO₂ material has advantages such as high specific capacity, abundant resource, and low cost, but also has obvious defects such as Li⁺/Ni²⁺ cation mixing, non-stoichiometric ratio, and safety issues at highly delithiated state, which hinder its practical application. Ions of metal such as Co, Mn, Al, Mg, and Ti have been introduced to replace a part of Ni³⁺ ions to form a binary or ternary layered oxide to improve the structure stability and the cycling performance of the material. A nickel-rich nickel-cobalt-manganese (NCM) or nickel-cobalt-aluminum (NCA) ternary cathode material with a higher energy density has been developed by flexibly regulating the ratio of Co to Mn to balance the composition and the electrochemical performance of the material. However, in the cycling process of the nickel-rich ternary cathode material, the anisotropic contraction and expansion of primary particles resulting from H2-H3 phase transition would intensify the stress inside the material, and induce the generation and expansion of micro-cracks inside the material, leading to the separation and pulverization of the primary particles, accelerating the side reaction between the electrolyte and the micro-cracks, and eventually resulting in failure of the material.

### SUMMARY

The present application provides a nickel-rich layered oxide material having a crystal structure with a hexagonal space group R-3m and a lattice microstrain of <,0.25%.

In some embodiments, the nickel-rich layered oxide material has a formula of LiNiₓAₐB_{b}C_{c}D_{d}O₂, wherein Ni is +3 valent, A is a +2 valent metal cation, B is a +3 valent metal cation, C is a +4 valent metal cation, D is a +5 or more valent metal cation, 0.8≤x<1, a>0, b>0, c>0, d≥0, and x+a+b+c+d=1.

In some embodiments, the nickel-rich layered oxide material is in form of particles. Among all types of metal cations comprised in B, C and D, at least two types of metal cations have greater concentrations at a surface of a primary particle of the nickel-rich layered oxide material than at a center of the primary particle.

In some embodiments, A is one or more of Mg²⁺, Ni²⁺, or Sr²⁺. B is one or more of Al³⁺, Co³⁺, Ga³⁺, Y³⁺, La³⁺, or Yb³⁺. C is one or more of Mn⁴⁺, Zr⁴⁺, Ti⁴⁺, Sn⁴⁺, or Ce⁴⁺. D is one or more of V⁵⁺, Nb⁵⁺, Sb⁵⁺, Ta⁵⁺, Mo⁶⁺, or W⁶⁺.

In some embodiments, the nickel-rich layered oxide material satisfies at least one of the following conditions:
a particle size D₅₀ of the nickel-rich layered oxide material is 2 µm to 20 µm;
a specific surface area of the nickel-rich layered oxide material is 0.2 m²/g to 2 m²/g; or
a morphology of the nickel-rich layered oxide material is a primary particle or a spherical secondary particle.

The present application provides a method for preparing a nickel-rich layered oxide material, including steps of:
a) mixing a solution I, a solution II, sodium hydroxide, and a complexant and subjecting them to a complexation and precipitation reaction, during which amounts of the sodium hydroxide and the complexant are controlled such that the mixture system is kept at a pH level of 10 to 13, to obtain a hydroxide precipitate,
   wherein the solution I comprises a nickel source compound and water, the solution II comprises a first metal source compound and water, the first metal source compound is at least one of a C source compound or a D source compound, or a mixture of at least one of a C source compound or a D source compound and at least one of a A source compound or a B source compound, the A source compound is a water-soluble metal salt corresponding to a +2 valent metal cation, the B source compound is a water-soluble metal salt corresponding to a +3 valent metal cation, the C source compound is a water-soluble metal salt corresponding to a +4 valent metal cation, and the D source compound is a water-soluble metal salt corresponding to a +5 or more valent metal cation;
b) mixing the hydroxide precipitate, a lithium source compound, and a second metal source compound to obtain a mixture material,
   wherein the second metal source compound is one or more of the A source compound, the B source compound, the C source compound, or the D source compound;
c) subjecting the mixture material to a multi-step calcination under an oxygen-containing atmosphere to obtain the nickel-rich layered oxide material having a crystal structure with a hexagonal space group R-3m and a lattice microstrain of ≤0.25%.

In some embodiments, in the step a), the solution I has a metal ion concentration of 1 mol/L to 5 mol/L. The solution II has a total metal ion concentration of 0.5 mol/L to 5 mol/L.

In some embodiments, in the step a), the sodium hydroxide is mixed in the form of an aqueous solution of the sodium hydroxide. The aqueous solution of the sodium hydroxide has a concentration of 0.5 mol/L to 4 mol/L. The complexant is one or more of ammonium hydroxide, ethylenediamine tetraacetic acid (EDTA), or ethylenediamine. The complexant is mixed in form of an aqueous solution of the complexant. The aqueous solution of the complexant has a concentration of 0.5 mol/L to 10 mol/L.

In some embodiments, in the step a), the complexation and precipitation reaction is performed under stirring with a stirring speed of 200 r/min to 1000 r/min. The complexation and precipitation reaction is performed at a temperature of 30 °C to 70 °C. The complexation and precipitation reaction is performed for a period of 10 h to 50 h.

In some embodiments, in the step c), the multi-step calcination specifically includes:
i) increasing a temperature from an ambient temperature to a first calcination temperature to perform a first thermostatic calcination,
   wherein the first calcination temperature is 300 °C to 600 °C, the temperature is increased to the first calcination temperature at an increasing rate of 1 °C/min to 6 °C/min, and the first thermostatic calcination is performed for a period of 4 h to 10 h;
ii) further increasing the temperature to a second calcination temperature to perform a second thermostatic calcination,
   wherein the second calcination temperature is 700 °C to 1000 °C, the temperature is increased to the second calcination temperature at a rate of 1 °C/min to 6 °C/min, and the second thermostatic calcination is performed for a period 1 h to 5 h;
iii) regulating the temperature to a third calcination temperature to perform a third thermostatic calcination,
   wherein the third calcination temperature is 700 °C to 900 °C and is lower than or equal to the second calcination temperature, the temperature is regulated to the third calcination temperature at a rate of 0 °C/min to 10 °C/min, and the third thermostatic calcination is performed for a period of 10 h to 20 h.

In some embodiments, in the step c), in the multi-step calcination, oxygen is continuously introduced into an equipment for the calcination to provide the oxygen-containing atmosphere required for the calcination. An oxygen introducing rate in the step i) is 0.5 m³/h to 5 m³/h. An oxygen introducing rate in the step ii) is 0.5 m³/h to 5 m³/h, and an oxygen introducing rate in the step iii) is 0.5 m³/h to 5 m³/h..

In some embodiments, the first metal source compound includes the A source compound, the B source compound, the C source compound, and optionally the D source compound.

In some embodiments, the A source compound, the B source compound, the C source compound, or the D source compound in the second metal source compound is a carbonate, a hydroxide, or an oxide of the +2 valent metal cation, the +3 valent metal cation, the +4 valent metal cation, or the +5 valent metal cation.

The present application further provides a lithium secondary battery including the nickel-rich layered oxide material as described in the above technical solutions, or the nickel-rich layered oxide material prepared by the method as described in the above technical solutions.

The present application further provides an electrical device equipped with the lithium secondary battery as described in the above technical solutions.

As compared to the prior art, the present application provides a nickel-rich layered oxide material and a preparation method and an application thereof. The nickel-rich layered oxide material provided in the present application has a crystal structure with a hexagonal space group R-3m and a lattice microstrain of ≤0.25%. In the present application, a high-entropy system of multi-valent and multi-type metal cations is designed, the composition of a precursor (hydroxide precipitate) and the calcination process are optimized, and the diffusion retardation effect of the high-entropy component in the calcination process is utilized to regulate the distribution of elements in the material and induce granules to grow in a direction of low stress, thereby decreasing the intensity of the microstrain in the crystal structure of the bulk material. The nickel-rich layered oxide material provided in the present application has a relatively low microstrain, and good structure stability and safety at high potential.

### BRIEF DESCRIPTION OF THE DRAWINGS

In order to illustrate the embodiments of the present application or the technical solution in the conventional technology more clearly, the drawings used in the description of the embodiments of the present application or of the conventional technology will be described briefly. Apparently, the following described drawings are merely embodiments of the present application, and other drawings can be derived by one of ordinary skill in the art without any creative effort.
FIG. 1 shows a scanning electron microscopy (SEM) image of a nickel-rich layered oxide material in Example 1 of the present application.
FIG. 2 shows distribution of Zr and W elements at different depths from a surface of a primary particle of the nickel-rich layered oxide material in Example 1 of the present application.
FIG. 3 shows an X-Ray diffraction (XRD) spectrum and a LeBail refined XRD spectrum of the nickel-rich layered oxide material in Example 1 of the present application.
FIG. 4 shows Williamson-Hall plots of oxide materials prepared in Example 1 and Comparative Examples 1 to 3 of the present application.
FIG. 5 shows a comparison of cycling performances of oxide materials prepared in Example 1 and Comparative Examples 1 to 3 of the present application tested in lithium secondary cells.

### DETAILED DESCRIPTION

The technical solutions of the embodiments of the present application will now be described clearly and completely. Apparently, the embodiments described are only part rather than all of the embodiments of the present application. Based on the embodiments described in the present application, all other embodiments obtained by those of ordinary skill in the art without any creative effort are within the scope of protection of the present application.

A high-entropy material is a type of single-phase material containing 5 or more elements which are solid-dissolved with each other at an equimolar or nearly equimolar ratio. The high-entropy material exhibits unique effects in terms of thermodynamics, kinetics, microstructure, and performance, such as high-entropy effect, diffusion retardation effect, and lattice distortion effect. In the present application, the performance advantage of the high-entropy material is combined to optimize a structure feature of a cathode material to develop a cathode material for a lithium battery with good structure stability and safety at high potential.

The present application provides a nickel-rich layered oxide material, and a preparation method and an application thereof, to solve the crucial technical problem that the nickel-rich layered oxide as a cathode material has poor structure stability and poor safety at high potential due to its H2-H3 phase transition. In the present application, a high-entropy system of multi-valent and multi-type metal cations is designed, the composition of a precursor and the calcination process are optimized, and the diffusion retardation effect of the high-entropy component in the calcination process is utilized to regulate the distribution of elements in the material and induce granules to grow in a direction of low stress, thereby decreasing the intensity of the microstrain in the crystal structure of the bulk material, so that the stress accumulation in the material at high potential is reduced, and the structure stability and the safety of the material are improved.

It should be noted that the technical solution of the present application is different from the conventional metal-ion-doped nickel-rich layered oxide material in that, in the conventional doping with a single metal ion or multiple metal ions, the stability of the crystal structure is generally improved by a relatively high metal-oxygen bond energy, whereas for the nickel-rich layered oxide in the present application, a high-entropy nickel-rich solid solution is formed by multi-valent and multi-type metal cations, the composition of a precursor and the calcination process are optimized, and the specific effect (i.e., the diffusion retardation effect) of the high-entropy component in the calcination process is utilized to decrease the microstrain in the crystal structure of the material, so that the stress accumulation in the material at high potential is reduced, and the electrochemical performance and the safety of the material are improved.

To achieve the above purpose, the following technical solutions are specifically provided.

The present application provides a nickel-rich layered oxide material having a crystal structure with a hexagonal space group R-3m and a lattice microstrain of ≤0.25%. In the present application, the lattice microstrain can specifically be 0.05%, 0.08%, 0.14%, 0.16%, 0.19%, or 0.22%.

The nickel-rich layered oxide material can have a chemical formula of LiNiₓAₐB_{b}C_{c}D_{d}O₂, wherein Ni is +3 valent; A is a +2 valent metal cation, such as one or more of Mg²⁺, Ni²⁺, or Sr²⁺; B is a +3 valent metal cation, such as one or more of Al³⁺, Co³⁺, Ga³⁺, Y³⁺, La³⁺, or Yb³⁺; C is a +4 valent metal cation, such as one or more of Mn⁴⁺, Zr⁴⁺, Ti⁴⁺, Sn⁴⁺, or Ce⁴⁺; D is a +5 or more valent metal cation, such as one or more of V⁵⁺, Nb⁵⁺, Sb⁵⁺, Ta⁵⁺, Mo⁶⁺, or W⁶⁺; 0.8≤x<1, a>0, b>0, c>0, d≥0, and x+a+b+c+d=1.

The nickel-rich layered oxide material can be in form of particles. In some embodiments, among all types of metal cations included in B, C, and D, at least two types of metal cations have higher concentrations at a surface of a primary particle of the nickel-rich layered oxide material than at a center of the primary particle. In the present application, the concentration gradients of two or more types of metal cations in the primary particle can stabilize the surface structure of the material via a synergistic effect, inhibit the loss of oxygen at high potential, and improving the electrochemical stability of the material.

In the nickel-rich layered oxide material provided in the present application, the at least two types of metal cations, which have greater concentrations at the surface of the primary particle than at the center of the primary particle, can be metal cations with the same valence state or different valence states, which is not specifically limited herein.

The nickel-rich layered oxide material can have a particle size D₅₀ of 2 µm to 20 µm, such as 2 µm, 3 µm, 3.2 µm, 4 µm, 5 µm, 6 µm, 7 µm, 8 µm, 9 µm, 10 µm, 10.2 µm, 10.5 µm, 11 µm, 12 µm, 12.5 µm, 13 µm, 14 µm, 15 µm, 16 µm, 17 µm, 18 µm, 19 µm, or 20 µm.

The nickel-rich layered oxide material can have a specific surface area of 0.2 m²/g to 2 m²/g, such as 0.2 m²/g, 0.25 m²/g, 0.3 m²/g, 0.33 m²/g, 0.35 m²/g, 0.4 m²/g, 0.42 m²/g, 0.45 m²/g, 0.46 m²/g, 0.5 m²/g, 0.55 m²/g, 0.6 m²/g, 0.7 m²/g, 0.76 m²/g, 0.8 m²/g, 0.9 m²/g, 1 m²/g, 1.1 m²/g, 1.2 m²/g, 1.3 m²/g, 1.4 m²/g, 1.5 m²/g, 1.6 m²/g, 1.7 m²/g, 1.8 m²/g, 1.9 m²/g, or 2 m2/g.

The nickel-rich layered oxide material can have a morphology of a primary particle or a spherical secondary particle.

In some embodiments provided in the present application, the nickel-rich layered oxide material can be of a chemical formula selected from any one of the following chemical formulas:
LiNi_{0.874}Sr_{0.0045}Co_{0.058}Al_{0.015}Mn_{0.0388}Zr_{0.0078}W_{0.0019}O₂;
LiNi_{0.814}Mg_{0.003}Co_{0.108}Al_{0.01}Mn_{0.058}Ti_{0.0048}Ta_{0.0022}O₂;
LiNi³⁺_{0.905}Ni²⁺_{0.004}Co_{0.059}Y_{0.005}Mn_{0.019}Zr_{0.0058}Nb_{0.0022}O₂;
LiNi_{0.867}Mg_{0.005}Co_{0.108}Al_{0.01}Zr_{0.004}Ti_{0.004}W_{0.002}O₂;
LiNi_{0.818}Sr_{0.006}Co_{0.060}Yb_{0.005}Mn_{0.109}Ta_{0.002}O₂;
LiNi³⁺_{0.9}Ni²⁺_{0.004}Co_{0.039}Al_{0.01}Mn_{0.039}Zr_{0.006}W_{0.002}O₂; or
LiNi_{0.943}Mg_{0.01}Al_{0.01}Mn_{0.02}Zr_{0.007}Ti_{0.008}Sb_{0.002}O₂.

The present application further provides a preparation method of the nickel-rich layered oxide material in the above-described technical solutions, including steps of:
a) mixing a solution I, a solution II, sodium hydroxide, and a complexant and subjecting them to a complexation and precipitation reaction, during which amounts of the sodium hydroxide and the complexant are controlled such that the mixture system is kept at a pH level of 10 to 13, to obtain a hydroxide precipitate;
b) mixing the hydroxide precipitate, a lithium source compound, and a second metal source compound to obtain a mixture material; and
c) subjecting the mixture material to a multi-step calcination under an oxygen-containing atmosphere to obtain the nickel-rich layered oxide material.

In the preparation method provided in the present application, in the step a), the solution I includes a nickel source compound and water. The nickel source compound is a soluble salt of nickel, such as one or more of nickel sulfate, nickel chloride, or nickel nitrate. The concentration of metal ions in the solution I can be 1 mol/L to 5 mol/L, such as 1 mol/L, 1.5 mol/L, 2 mol/L, 2.5 mol/L, 3 mol/L, 3.5 mol/L, 4 mol/L, 4.5 mol/L, or 5 mol/L.

In the preparation method provided in the present application, in the step a), the solution II includes a first metal source compound and water. The first metal source compound is at least one of a C source compound or a D source compound, or a mixture of at least one of a C source compound or a D source compound and at least one of a A source compound or a B source compound. In the present application, the A source compound, the B source compound, the C source compound, and the D source compound are water-soluble metal salts corresponding to the +2 valent metal cation A, the +3 valent metal cation B, the +4 valent metal cation C, and the +5 or more valent metal cation D, respectively. Each of the water-soluble metal salts contains consistent metal element with the corresponding metal cation, with the same valence state or different valence states, which is not specifically limited herein. In the present application, the total concentration of metal ions in the solution II is preferably 0.5 mol/L to 5 mol/L, and specifically 0.5 mol/L, 1 mol/L, 1.5 mol/L, 2 mol/L, 2.5 mol/L, 3 mol/L, 3.5 mol/L, 4 mol/L, 4.5 mol/L, or 5 mol/L.

In some embodiments, the first metal source compound includes the A source compound, the B source compound, and the C source compound.

In some embodiments, the first metal source compound includes the A source compound, the B source compound, the C source compound, and the D source compound.

In the preparation method provided in the present application, in the step a), the sodium hydroxide can be mixed in the form of an aqueous solution of sodium hydroxide. The concentration of the aqueous solution of sodium hydroxide can be 0.5 mol/L to 4 mol/L, such as 0.5 mol/L, 1 mol/L, 1.5 mol/L, 2 mol/L, 2.5 mol/L, 3 mol/L, 3.5 mol/L, or 4 mol/L.

In the preparation method provided in the present application, in the step a), the complexant can be one or more of ammonium hydroxide, ethylene diamine tetraacetic acid, or ethylene diamine. The complexant can be mixed in the form of an aqueous solution of the complexant. The concentration of the aqueous solution of the complexant can be 0.5 mol/L to 10 mol/L, such as 0.5 mol/L, 1 mol/L, 1.5 mol/L, 2 mol/L, 2.5 mol/L, 3 mol/L, 3.5 mol/L, 4 mol/L, 4.5 mol/L, 5 mol/L, 5.5 mol/L, 6 mol/L, 6.5 mol/L, 7 mol/L, 7.5 mol/L, 8 mol/L, 8.5 mol/L, 9 mol/L, 9.5 mol/L, or 10 mol/L.

In the preparation method provided in the present application, in the step a), the mixing is preferably performed in a reactor where water has been added as a base liquid. The pH level of the mixture system can be specifically kept at 10, 10.1, 10.2, 10.3, 10.4, 10.5, 10.6, 10.7, 10.8, 10.9, 11, 11.1, 11.2, 11.3, 11.4, 11.5, 11.6, 11.7, 11.8, 11.9, 12, 12.1, 12.2, 12.3, 12.4, 12.5, 12.7, 12.8, 12.9, or 13. The complexation and precipitation reaction can be performed under stirring. The stirring rate can be 200 r/min to 1000 r/min, such as 200 r/min, 250 r/min, 300 r/min, 350 r/min, 400 r/min, 450 r/min, 500 r/min, 550 r/min, 600 r/min, 650 r/min, 700 r/min, 750 r/min, 800 r/min, 850 r/min, 900 r/min, 950r/min, or 1000 r/min. The complexation and precipitation reaction can be performed at a temperature of 30 °C to 70 °C, such as 30 °C, 35 °C, 40 °C, 45 °C, 50 °C, 55 °C, 56 °C, 60 °C, 65 °C, or 70 °C. The complexation and precipitation reaction can be performed for a period of 10 h to 50 h, such as 10 h, 15 h, 20 h, 25 h, 30 h, 35 h, 40 h, 42 h, 45 h or 50 h.

In the preparation method provided in the present application, in the step a), the obtained hydroxide precipitate can be washed and dried. The drying can be performed at a temperature of 100 °C to 300 °C, such as 100 °C, 110 °C, 120 °C, 130 °C, 140 °C, 150 °C, 160 °C, 170 °C, 180 °C, 190 °C, 200 °C, 210 °C, 220 °C, 230 °C, 240 °C, 250 °C, 260 °C, 270 °C, 280 °C, 290°C, or 300°C.

In the preparation method provided in the present application, in the step b), the lithium source compound can be one or more of LiOH, Li₂CO₃, Li₂SO₄, LiCl, or LiNO₃. The second metal source compound is one or more of the A source compound, the B source compound, the C source compound, or the D source compound.

In some embodiments, the A source compound, the B source compound, the C source compound, or the D source compound included in the second metal source compound can be different from the A source compound, the B source compound, the C source compound, or the D source compound included in the first metal source compound.

In some embodiments, the A source compound, the B source compound, the C source compound, or the D source compound in the second metal source compound can be a carbonate, a hydroxide, or an oxide of A, B, C, or D.

In the preparation method provided in the present application, in the step c), the oxygen-containing atmosphere includes, but is not limited to, air and pure oxygen, such as pure oxygen.

In the preparation method provided in the present application, in the step c), the multi-step calcination can include:
i) increasing a temperature from an ambient temperature to a first calcination temperature to perform a first thermostatic calcination;
ii) increasing the temperature again to a second calcination temperature to perform a second thermostatic calcination; and
iii) adjusting the temperature to a third calcination temperature to perform a third thermostatic calcination.

During the above-described calcination process provided in the present application, in the step i), the first calcination temperature can be 300 °C to 600 °C, such as 300 °C, 310 °C, 320 °C, 330 °C, 340 °C, 350 °C, 360 °C, 370 °C, 380 °C, 390 °C, 400 °C, 410 °C, 420 °C, 430 °C, 440 °C, 450 °C, 460 °C, 470 °C, 480 °C, 490 °C, 500 °C, 510 °C, 520 °C, 530 °C, 540 °C, 550 °C, 560 °C, 570 °C, 580 °C, 590 °C, or 600 °C. The temperature can be increased to the first calcination temperature at an increasing rate of 1 °C/min to 6 °C/min, such as 1 °C/min, 1.5 °C/min, 2 °C/min, 2.5 °C/min, 3 °C/min, 3.5 °C/min, 4 °C/min, 4.5 °C/min, 5 °C/min, 5.5 °C/min, or 6 °C/min. The first thermostatic calcination can be performed for a period of 4 h to 10 h, such as 4 h, 4.5 h, 5 h, 5.5 h, 6 h, 6.5 h, 7 h, 7.5 h, 8 h, 8.5 h, 9 h, 9.5 h or 10 h.

During the above-described calcination process provided in the present application, in the step ii), the second calcination temperature can be 700 °C to 1000 °C, such as 700 °C, 710 °C, 720 °C, 730 °C, 740 °C, 750 °C, 760 °C, 770 °C, 780 °C, 790 °C, 800 °C, 810 °C, 820 °C, 830 °C, 840 °C, 850 °C, 860 °C, 870 °C, 880 °C, 890 °C, 900 °C, 910 °C, 920 °C, 930 °C, 940 °C, 950 °C, 960 °C, 970 °C, 980 °C, 990 °C, or 1000 °C. The temperature can be increased to the second calcination temperature at an increasing rate of 1 °C/min to 6 °C/min, such as 1 °C/min, 1.5 °C/min, 2 °C/min, 2.5 °C/min, 3 °C/min, 3.5 °C/min, 4 °C/min, 4.5 °C/min, 5 °C/min, 5.5 °C/min, or 6 °C/min. The second thermostatic calcination can be performed for a period of 1 hour to 5 h, such as 1 hour, 1.5 h, 2 h, 2.5 h, 3 h, 3.5 h, 4 h, 4.5 h, or 5 h.

During the above-described calcination process provided in the present application, in the step iii), the third calcination temperature can be 700 °C to 900 °C, such as 700 °C, 710 °C, 720 °C, 730 °C, 740 °C, 750 °C, 760 °C, 770 °C, 780 °C, 790 °C, 800 °C, 810 °C, 820 °C, 830 °C, 840 °C, 850 °C, 860 °C, 870 °C, 880 °C, 890 °C, or 900 °C. The third calcination temperature is lower than or equal to the second calcination temperature. The temperature can regulated to the third calcination temperature at a rate of 0 °C/min to 10 °C/min, such as 0 °C/min (i.e., the temperature is not adjusted), 0.5 °C/min, 1 °C/min, 1.5 °C/min, 2 °C/min, 2.5 °C/min, 3 °C/min, 3.5 °C/min, 4 °C/min, 4.5 °C/min, 5 °C/min, 5.5 °C/min, 6 °C/min, 6.5 °C/min, 7 °C/min, 7.5 °C/min, 8 °C/min, 8.5 °C/min, 9 °C/min, 9.5 °C/min, or 10 °C/min. The third thermostatic calcination can be performed for a period of 10 h to 20 h, such as 10 h, 10.5 h, 11 h, 11.5 h, 12 h, 12.5 h, 13 h, 13.5 h, 14 h, 14.5 h, 15 h, 15.5 h, 16 h, 16.5 h, 17 h, 17.5 h, 18 h, 18.5 h, 19 h, 19.5 h, or 20 h.

During the above-described calcination process provided in the present application, oxygen can be continuously introduced into the calcination equipment used in the multi-step calcination to provide the oxygen-containing atmosphere required for calcination. In the step i), the oxygen can be introduced at a rate of 0.5 m³/h to 5 m³/h, such as 0.5 m³/h, 1 m³/h, 1.5 m³/h, 2 m³/h, 2.5 m³/h, 3 m³/h, 3.5 m³/h, 4 m³/h, 4.5 m³/h, or 5 m³/h. In the step ii), the oxygen can be introduced at a rate of 0.5 m³/h to 5 m³/h, such as 0.5 m³/h, 1 m³/h, 1.5 m³/h, 2 m³/h, 2.5 m³/h, 3 m³/h, 3.5 m³/h, 4 m³/h, 4.5 m³/h, or 5 m³/h. In the step iii), the oxygen can be introduced at a rate of 0.5 m³/h to 5 m³/h, such as 0.5 m³/h, 1 m³/h, 1.5 m³/h, 2 m³/h, 2.5 m³/h, 3 m³/h, 3.5 m³/h, 4 m³/h, 4.5 m³/h, or 5 m³/h.

In the preparation method provided in the present application, after the calcination, the obtained product can be cooled, and then pulverized and sieved.

The present application further provides a lithium ion secondary battery, including a cathode, an anode, an electrolyte, and a separator interposed between the cathode and the anode. The material of the cathode includes the nickel-rich layered oxide material as described in the above technical solutions or the nickel-rich layered oxide material obtained according to the preparation method as described in the above technical solutions.

The present application further provides an electrical device. The electrical device is equipped with the lithium ion secondary battery as described in the above technical solutions.

For the sake of clarity, a detailed description is provided below by means of the following examples and comparative examples.

### Example 1

4594.6 g of NiSO₄ was weighed and dissolved in deionized water to prepare a salt solution I of 2 mol/L. 326.1 g of CoSO₄, 24.6 g of NaAlO₂, 173.1 g of MnSO₄, 55.4 g of Zr(SO₄)₂, and 10.2 g of ammonium tungstate were weighed and dissolved in deionized water to prepare a high-entropy element solution II with a metal ion concentration of 1 mol/L. A NaOH solution III with a concentration of 1.5 mol/L and an ammonium hydroxide complexant solution IV with a concentration of 2.0 mol/L were prepared. Deionized water was added into a reactor as a base liquid, and the solutions I, II, III, and IV were simultaneously pumped into the reactor to carry out a complexation and precipitation reaction, during which the flow rates of the NaOH solution and the ammonium hydroxide complexant solution were controlled such that the mixture reaction liquid in the reactor was always kept at a pH range of 11.2 ± 0.05, the mixture liquid in the reactor was stirred at a rate of 800 r/min, and the reaction temperature was kept at 50±1 °C. After the reaction was continuously carried out for 40 h, the resulting precipitate was taken out, washed with deionized water, and dried at a drying temperature of 150 °C to obtain a hydroxide precursor X.

The above hydroxide precursor X, 873.6 g of LiOH, and 10.9 g of Sr(OH)₂ were fully mixed by a high-speed mixer to obtain a mixture Y

The above mixture Y was placed in a furnace with an oxygen-containing atmosphere, and subjected to a multi-step calcination. Oxygen was continuously introduced into the furnace throughout the calcination. The multi-step calcination was specifically as follows. The temperature was firstly increased to 550 °C at which the calcination was performed for 4 h, with a temperature increasing rate of 3 °C/min and an oxygen introducing rate of 3 m³/h. Then, the temperature was increased to 800 °C at which the calcination was performed for 1 h, with a temperature increasing rate of 3 °C/min and an oxygen introducing rate of 4 m³/h. Then, the temperature was decreased to 780 °C at which the calcination was performed for 14 h, with a temperature decreasing rate of 4 °C/min and an oxygen introducing rate of 3 m³/h.

After the calcination, the product was cooled in the furnace, and then pulverized and sieved, to obtain a nickel-rich layered oxide material with a chemical formula of LiNi_{0.874}Sr_{0.0045}Co_{0.058}Al_{0.015}Mn_{0.0388}Zr_{0.0078}W_{0.0019}O₂.

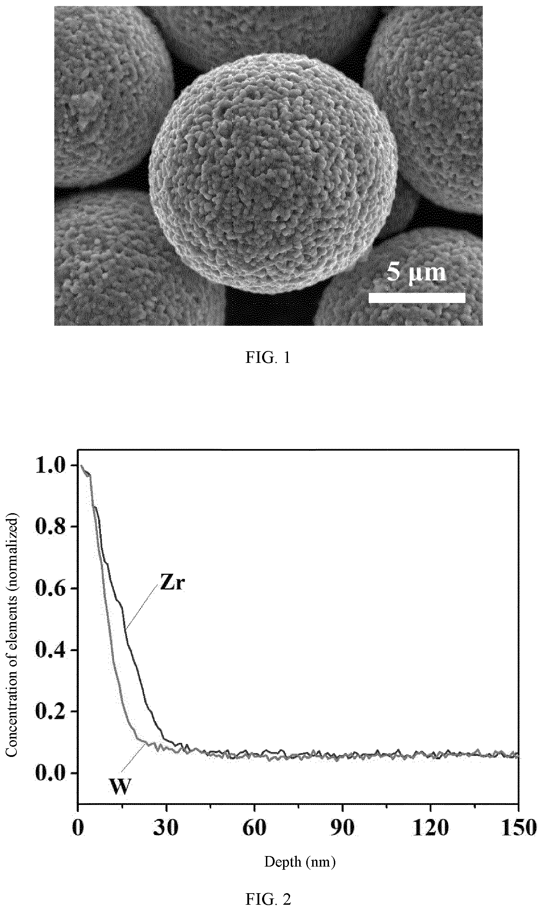

The nickel-rich layered oxide material prepared in this Example was observed by a scanning electron microscopy (SEM), and the result was shown in FIG. 1. FIG. 1 shows a SEM image of the nickel-rich layered oxide material in Example 1 of the present application. It can be seen from FIG. 1 that the material had a smooth surface, and was a spherical secondary particle formed by agglomerated primary particles with a particle size D₅₀ of about 400 nm. The secondary particle had a particle size of about 12.8 µm.

The particle size D₅₀ and the specific surface area of the nickel-rich layered oxide material prepared in this Example were measured, and the results showed that the median particle size D₅₀ was 12.5 µm and the specific surface area was 0.45 m²/g.

The metal ion concentrations at different depths of the nickel-rich layered oxide material prepared in this Example was detected by a time-of-flight secondary ion mass spectrometer (ToF-SIMS), with a sputtering rate of 0.15 nm/s. The experimental results were shown in FIG. 2. FIG. 2 shows distribution of Zr and W elements at different depths from the surface of the primary particle of the nickel-rich layered oxide material in Example 1 of the present application. It can be seen from FIG. 2 that the concentrations of Zr and W elements within 50 nm depth from the surface of the primary particle were much higher than those at the center of the primary particle.

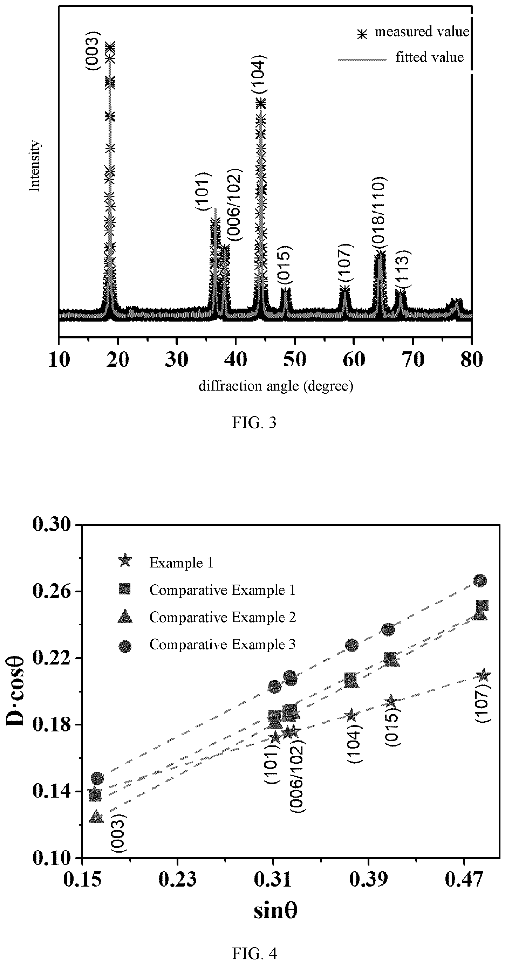

The nickel-rich layered oxide material prepared this Example was analyzed by X-ray diffraction (XRD). In the XRD analysis, Cu-Kα target was adopted, an emission wavelength λ was 0.1548 nm, a scanning voltage was 40 kV, a current was 40 mA, and the step scanning mode was adopted with a step width of 0.01°, a step time of 3 seconds, and a scanning range of 10° to 80°. The experimental results were shown in FIG. 3. FIG. 3 shows an XRD spectrum and a LeBail refined XRD spectrum of the nickel-rich layered oxide material in Example 1of the present application. It can be seen from FIG. 3 that the diffraction peak of the material corresponded to a hexagonal layered structure with a space group R-3m.

### Example 2

3869.6 g of NiCl₂ was weighed and dissolved in deionized water to prepare a salt solution I of 2.5 mol/L. 607.2 g of CoSO₄, 258.7 g of MnSO₄, and 18.2 g of TiCl₄ were weighed and dissolved in deionized water to prepare a high-entropy element solution II with a metal ion concentration of 0.5 mol/L. A NaOH solution III with a concentration of 2.0 mol/L and an ammonium hydroxide complexant solution IV with a concentration of 2.5 mol/L were prepared. Deionized water was added into a reactor as a base liquid, and the solutions I, II, III, and IV were simultaneously pumped into the reactor to carry out a complexation and precipitation reaction, during which the flow rates of the NaOH solution and the ammonium hydroxide complexant solution were controlled such that the mixture reaction liquid in the reactor was always kept at a pH range of 12.0 ± 0.05, the mixture liquid in the reactor was stirred at a rate of 800 r/min, and the reaction temperature was kept at 55±1 °C. After the reaction was continuously carried out for 36 h, the resulting precipitate was taken out, washed with deionized water, and dried at a drying temperature of 150 °C to obtain a hydroxide precursor X.

The above hydroxide precursor X, 769.6 g of Li₂CO₃, 5 g of MgCO₃, 15.6 g of Al(OH)₃, and 9.7 g of Ta₂O₅ were fully mixed by a high-speed mixer to obtain a mixture Y

The above mixture Y was placed in a furnace with an oxygen-containing atmosphere, and subjected to a multi-step calcination. Oxygen was continuously introduced into the furnace throughout the calcination. The multi-step calcination was specifically as follows. The temperature was firstly increased to 500 °C at which the calcination was performed for 6 h, with a temperature increasing rate of 4 °C/min and an oxygen introducing rate of 2 m³/h. Then, the temperature was increased to 820 °C at which the calcination was performed for 2 hour, with a temperature increasing rate of 4 °C/min and an oxygen introducing rate of 5 m³/h. Then, the temperature was decreased to 810 °C at which the calcination was performed for 10 h, with a temperature decreasing rate of 5 °C/min and an oxygen introducing rate of 3 m³/h.

After thecalcination, the product was cooled in the furnace, and then pulverized and sieved to obtain a nickel-rich layered oxide material with a chemical formula of LiNi_{0.814}Mg_{0.003}Co_{0.108}Al_{0.01}Mn_{0.058}Ti_{0.0048}Ta_{0.0022}O₂.

The nickel-rich layered oxide material prepared in this Example was characterized, and the results showed that the material had a morphology of a spherical secondary particle, a median particle size D₅₀ of 10.2 µm, and a specific surface area of 0.55 m²/g. The concentrations of Ti and Ta elements within 50 nm depth from the surface of the primary particle were much higher than those at the center of the primary particle.

### Example 3

4778.6 g of NiSO₄ was weighed and dissolved in deionized water to prepare a salt solution I of 4.0 mol/L. 280.8 g of CoCl₂, 84.8 g of MnSO₄, and 41.2 g of Zr(SO₄)₂ were weighed and dissolved in deionized water to prepare a high-entropy element solution II with a metal ion concentration of 2.5 mol/L. A NaOH solution III with a concentration of 3.0 mol/L and an EDTA complexant solution IV with a concentration of 5.0 mol/L were prepared. Deionized water was added into a reactor as a base liquid, and the solutions I, II, III, and IV were simultaneously pumped into the reactor to carry out a complexation and precipitation reaction, during which the flow rates of the NaOH solution and the EDTA complexant solution were controlled such that the mixture reaction liquid in the reactor was always kept at a pH range of 12.3±0.05, the mixture liquid in the reactor was stirred at a rate of 1000 r/min, and the reaction temperature was kept at 58±1 °C. After the reaction was continuously carried out for 30 h, the resulting precipitate was taken out, washed with deionized water, and dried at a drying temperature of 180 °C to obtain a hydroxide precursor X.

The above hydroxide precursor X, 873.6 g ofLiOH, 11.3 g of Y₂O₃, and 5.8 g of Nb₂O₅ were fully mixed by a high-speed mixer to obtain a mixture Y

The above mixture Y was placed in a furnace with an oxygen-containing atmosphere, and subjected to a multi-step calcination. Oxygen was continuously introduced into the furnace throughout the calcination. The multi-step calcination was specifically as follows. The temperature was firstly increased to 500 °C at which the calcination was performed for 6 h, with a temperature increasing rate of 4 °C/min and an oxygen introducing rate of 2 m³/h. Then, the temperature was increased to 850 °C at which the calcination was performed for 3 h, with a temperature increasing rate of 4 °C/min and an oxygen introducing rate of 2 m³/h. Then, the temperature was decreased to 800 °C at which the calcination was performed for 11 h, with a temperature decreasing rate of 5 °C/min and an oxygen introducing rate of 2 m³/h.

After thecalcination, the product was cooled in the furnace, and then pulverized and sieved to obtain a nickel-rich layered oxide material with a chemical formula of LiNi³⁺_{0.905}Ni²⁺_{0.004}Co_{0.059}Y_{0.005}Mn_{0.019}Zr_{0.0058}Nb_{0.0022}O₂.

The nickel-rich layered oxide material prepared in this Example was characterized, and the results showed that the material had a morphology of monodispersed primary particles, a median particle size D₅₀ of 3.0 µm, and a specific surface area of 0.76 m²/g. The concentrations of Y, Zr, and Nb elements within 50 nm depth from the surface of the primary particle were much higher than those at the center of the primary particle.

### Example 4

4557.8 g of NiSO₄ was weighed and dissolved in deionized water to prepare a salt solution I of 1.5 mol/L. 513.9 g of CoCl₂, 28.4 g of Zr(SO₄)₂, and 15.2 g of TiCl₄ were weighed and dissolved in deionized water to prepare a high-entropy element solution II with a metal ion concentration of 3.0 mol/L. A NaOH solution III with a concentration of 2.0 mol/L and an ammonium hydroxide complexant solution IV with a concentration of 6.0 mol/L were prepared. Deionized water was added into a reactor as a base liquid, and the solutions I, II, III, and IV were simultaneously pumped into the reactor to carry out a complexation and precipitation reaction, during which the flow rates of the NaOH solution and the ammonium hydroxide complexant solution were controlled such that the mixture reaction liquid in the reactor was always kept at a pH range of 11.5±0.05, the mixture liquid in the reactor was stirred at a rate of 600 r/min, and the reaction temperature was kept at 55±1 °C. After the reaction was continuously carried out for 50 h, the resulting precipitate was taken out, washed with deionized water, and dried at a drying temperature of 120 °C to obtain a hydroxide precursor X.

The above hydroxide precursor X, 873.6 g of LiOH, 8.4 g of MgCO₃, 10.2 g of Al₂O₃, and 9.3 g of WO₃ were fully mixed by a high-speed mixer to obtain a mixture Y.

The above mixture Y was placed in a furnace with an oxygen-containing atmosphere, and subjected to a multi-step calcination. Oxygen was continuously introduced into the furnace throughout the calcination. The multi-step calcination was specifically as follows. The temperature was firstly increased to 550 °C at which the calcination was performed for 5 h, with a temperature increasing rate of 4 °C/min and an oxygen introducing rate of 5 m³/h. Then, the temperature was increased to 760 °C at which the calcination was performed for 2 hour, with a temperature increasing rate of 4 °C/min and an oxygen introducing rate of 3 m³/h. Then, the temperature was kept at 760 °C and the calcination was further performed for 10 h, with an oxygen introducing rate of 3 m³/h.

After the calcination, the product was cooled in the furnace, and then pulverized and sieved to obtain a nickel-rich layered oxide material with a chemical formula of LiNi_{0.867}Mg_{0.005}Co_{0.108}Al_{0.01}Zr_{0.004}Ti_{0.004}W_{0.002}O₂.

The nickel-rich layered oxide material prepared in this Example was characterized, and the results showed that the material had a morphology of a spherical secondary particle, a median particle size D₅₀ of 15.0 µm, and a specific surface area of 0.33 m²/g. The concentrations of Zr, Ti, and W elements within 50 nm depth from the surface of the primary particle were much higher than those at the center of the primary particle.

### Example 5

3874.3 g of NiCl₂ was weighed and dissolved in deionized water to prepare a salt solution I of 2.0 mol/L. 331.7 g of CoSO₄ and 427.5 g of MnCh were weighed and dissolved in deionized water to prepare a high-entropy element solution II with a metal ion concentration of 4.0 mol/L. A NaOH solution III with a concentration of 1.5 mol/L and an ethylene diamine complexant solution IV with a concentration of 6.0 mol/L were prepared. Deionized water was added into a reactor as a base liquid, and the solutions I, II, III, and IV were simultaneously pumped into the reactor to carry out a complexation and precipitation reaction, during which the flow rates of the NaOH solution and the ethylene diamine complexant solution were controlled such that the mixture reaction liquid in the reactor was always kept at a pH range of 12.5±0.05, the mixture liquid in the reactor was stirred at a rate of 1000 r/min, and the reaction temperature was kept at 50±1 °C. After the reaction was continuously carried out for 20 h, the resulting precipitate was taken out, washed with deionized water, and dried at a drying temperature of 180 °C to obtain a hydroxide precursor X.

The above hydroxide precursor X, 769.6 g of Li₂CO₃, 17.7g of SrCO₃, 19.7g of Yb₂O₃, and 8.8 g of Ta₂O₅ were fully mixed by a high-speed mixer to obtain a mixture Y.

The above mixture Y was placed in a furnace with an oxygen-containing atmosphere, and subjected to a multi-step calcination. Oxygen was continuously introduced into the furnace throughout the calcination. The multi-step calcination was specifically as follows. The temperature was firstly increased to 600 °C at which the calcination was performed for 4 h, with a temperature increasing rate of 4 °C/min and an oxygen introducing rate of 5 m³/h. Then, the temperature was increased to 890 °C at which the calcination was performed for 3 h, with a temperature increasing rate of 4 °C/min and an oxygen introducing rate of 2 m³/h. Then, the temperature was decreased to 800 °C at which the calcination was performed for 11 h, with a temperature decreasing rate of 6 °C/min and an oxygen introducing rate of 4 m³/h.

After thecalcination, the product was cooled in the furnace, and then pulverized and sieved to obtain a nickel-rich layered oxide material with a chemical formula of LiNi_{0.818}Sr_{0.006}Co_{0.060}Yb_{0.005}Mn_{0.109}Ta_{0.002}O₂.

The nickel-rich layered oxide material prepared in this Example was characterized, and the results showed that the material had a morphology of monodispersed primary particles, a median particle size D₅₀ of 3.2 µm, and a specific surface area of 0.70 m²/g. The concentrations of Y, and Ta elements within 50 nm depth from the surface of the primary particle were much higher than those at the center of the primary particle.

### Example 6

4278.4 g of NiCl₂ was weighed and dissolved in deionized water to prepare a salt solution I of 3.0 mol/L. 219.3 g of CoSO₄, 154.4 g of MnCl₂, and 10.8 g of ammonium tungstate were weighed and dissolved in deionized water to prepare a high-entropy element solution II with a metal ion concentration of 1.0 mol/L. A NaOH solution III with a concentration of 4.0 mol/L and an ammonium hydroxide complexant solution IV with a concentration of 8.0 mol/L were prepared. Deionized water was added into a reactor as a base liquid, and the solutions I, II, III, and IV were simultaneously pumped into the reactor to carry out a complexation and precipitation reaction, during which the flow rates of the NaOH solution and the ammonium hydroxide complexant solution were controlled such that the mixture reaction liquid in the reactor was always kept at a pH range of 11.0±0.05, the mixture liquid in the reactor was stirred at a rate of 1000 r/min, and the reaction temperature was kept at 55±1 °C. After the reaction was continuously carried out for 60 h, the resulting precipitate was taken out, washed with deionized water, and dried at a drying temperature of 140 °C to obtain a hydroxide precursor X..

The above hydroxide precursor X, 873.6 g of LiOH, 5.9 g of NiO, 15.6 g of Al(OH)₃, and 14.6 g of ZrO₂ were fully mixed by a high-speed mixer to obtain a mixture Y.

The above mixture Y was placed in a furnace with an oxygen-containing atmosphere, and subjected to a multi-step calcination. Oxygen was continuously introduced into the furnace throughout the calcination. The multi-step calcination was specifically as follows. The temperature was firstly increased to 580 °C at which the calcination was performed for 5 h, with a temperature increasing rate of 3 °C/min and an oxygen introducing rate of 4 m³/h. Then, the temperature was increased to 780 °C at which the calcination was performed for 2 h, with a temperature increasing rate of 3 °C/min and an oxygen introducing rate of 6 m³/h. Then, the temperature was decreased to 750 °C at which the calcination was performed for 12 h, with a temperature decreasing rate of 3 °C/min and an oxygen introducing rate of 3 m³/h.

After thecalcination, the product was cooled in the furnace, and then pulverized and sieved to obtain a nickel-rich layered oxide material with a chemical formula of LiNi_{0.9}Ni²⁺_{0.004}Co_{0.039}Al_{0.01}Mn_{0.039}Zr_{0.006}W_{0.002}O₂.

The nickel-rich layered oxide material prepared in this Example was characterized, and the results showed that the material had a morphology of a spherical secondary particle, a median particle size D₅₀ of 12.0 µm, and a specific surface area of 0.46 m²/g. The concentrations of Zr, and W elements within 50 nm depth from the surface of the primary particle of the material were much higher than those at the center of the primary particle.

### Example 7

4957.4 g of NiSO₄ was weighed and dissolved in deionized water to prepare a salt solution I of 4.0 mol/L. 89.2 g of MnSO₄, 49.7 g of Zr(SO₄)₂, and 30.3 g of TiCl₄ were weighed and dissolved in deionized water to prepare a high-entropy element solution II with a metal ion concentration of 1.0 mol/L. A NaOH solution III with a concentration of 2.0 mol/L and an EDTA complexant solution IV with a concentration of 6.0 mol/L were prepared. Deionized water was added into a reactor as a base liquid, and the solutions I, II, III, and IV were simultaneously pumped into the reactor to carry out a complexation and precipitation reaction, during which the flow rates of the NaOH solution and the EDTA complexant solution were controlled such that the mixture reaction liquid in the reactor was always kept at a pH range of 12.3±0.05, the mixture liquid in the reactor was stirred at a rate of 900 r/min, and the reaction temperature was kept at 56±1 °C. After the reaction was continuously carried out for 48 h, the resulting precipitate was taken out, washed with deionized water, and dried at a drying temperature of 160 °C to obtain a hydroxide precursor X.

The above hydroxide precursor X, 873.6 g of LiOH, 16.8 g of MgCO₃, 15.6 g of Al(OH)₃, and 6.5 g of Sb₂O₅ were fully mixed by a high-speed mixer to obtain a mixture Y.

The above mixture Y was placed in a furnace with an oxygen-containing atmosphere, and subjected to a multi-step calcination. Oxygen was continuously introduced into the furnace throughout the calcination. The multi-step calcination was specifically as follows. The temperature was firstly increased to 520 °C at which the calcination was performed for 5 h, with a temperature increasing rate of 5 °C/min and an oxygen introducing rate of 3 m³/h. Then, the temperature was increased to 770 °C at which the calcination was performed for 5 h, with a temperature increasing rate of 3 °C/min and an oxygen introducing rate of 5 m³/h. Then, the temperature was decreased to 740 °C at which the calcination was performed for 10 h, with a temperature decreasing rate of 5 °C/min and an oxygen introducing rate of 3 m³/h.

After thecalcination, the product was cooled in the furnace, and then pulverized and sieved to obtain a nickel-rich layered oxide material with a chemical formula of LiNi_{0.943}Mg_{0.01}Al_{0.01}Mn_{0.02}Zr_{0.007}Ti_{0.008}Sb_{0.002}O₂.

The nickel-rich layered oxide material prepared in this Example was characterized, and the results showed that the material had a morphology of a spherical secondary particle, a median particle size D₅₀ of 10.5 µm, and a specific surface area of 0.42 m²/g. The concentrations of Zr, Ti, and Sb elements within 50 nm depth from the surface of the primary particle were much higher than those at the center of the primary particle.

### Comparative Example 1

Nickel sulfate, cobalt sulfate, and manganese sulfate were weighed at a Ni/Co/Mn molar ratio of 90:6:4, and dissolved in deionized water to prepare a mixture salt solution I of 2 mol/L. A NaOH solution II with a concentration of 1.5 mol/L and an ammonium hydroxide complexant solution III with a concentration of 2.0 mol/L were prepared. Deionized water was added into a reactor as a base liquid, and the solutions I, II, and III were simultaneously pumped into the reactor to carry out a complexation and precipitation reaction, during which the flow rates of the NaOH solution and the ammonium hydroxide complexant solution were controlled such that the mixture reaction liquid in the reactor was always kept at a pH range of 11.2 ± 0.05, the mixture liquid in the reactor was stirred at a rate of 800 r/min, and the reaction temperature was kept at 50±1 °C. After the reaction is continuously carried out for 40 h, the resulting precipitate was taken out, washed with deionized water, and dried at a drying temperature of 150 °C to obtain a manganese-nickel-cobalt hydroxide precursor X.

The above manganese-nickel-cobalt hydroxide precursor X and 873.6 g of LiOH were fully mixed by a high-speed mixer to obtain a mixture Y.

The above mixture Y was placed in a furnace with an oxygen atmosphere, and subjected to a multi-step calcination. Oxygen was continuously introduced into the furnace throughout the calcination. The multi-step calcination was specifically as follows. The temperature was firstly increased to 550 °C at which the calcination was performed for 6 h, with a temperature increasing rate of 3 °C/min and an oxygen introducing rate of 3 m³/h. Then, the temperature was increased to 800 °C at which the calcination was performed for 1 h, with a temperature increasing rate of 3 °C/min and an oxygen introducing rate of 4 m³/h. Then, the temperature was decreased to 782 °C and kept for 14 h, with a temperature decreasing rate of 4 °C/min and an oxygen introducing rate of 3 m³/h.

After thecalcination, the product was cooled in the furnace, and then pulverized and sieved to obtain a nickel-rich layered oxide material with a chemical formula of LiNi_{0.90}Co_{0.06}Mn_{0.04}O₂.

The nickel-rich layered oxide material prepared in this Comparative Example was characterized, and the results showed that the material had a morphology of a spherical secondary particle, a median particle size D₅₀ of 13.2 µm, and a specific surface area of 0.39 m2/g.

### Comparative Example 2

Reference was made to the preparation method in Comparative Example 1, with the following differences. In the preparation of mixture Y, the manganese-nickel-cobalt hydroxide precursor X, 873.6 g of LiOH, 10.9 g of Sr(OH)₂, 23.4 g of Al(OH)₃, 19.0 g of ZrO₂, and 10.2 g of ammonium tungstate were fully mixed by a high-speed mixer to obtain the mixture Y The finally prepared multi-component-doped nickel-rich layered oxide material has an approximate chemical formula of LiNi_{0.874}Sr_{0.0045}Co_{0.058}Al_{0.015}Mn_{0.0388}Zr_{0.0078}W_{0.0019}O₂.

The multi-component-doped nickel-rich layered oxide material prepared in this Comparative Example was characterized, and the results showed that the material had a morphology of a spherical secondary particle, a median particle size D₅₀ of 13.0 µm, and a specific surface area of 0.42 m²/g. The Zr and W elements exhibited island segregation at the surface of the spherical secondary particle, and the Zr and W elements were undetectable in the primary particle.

### Comparative Example 3

Reference was made to the preparation method in Comparative Example 1, with the following differences. The mixture Y was placed in a furnace with an oxygen atmosphere and subjected to the following calcination: the temperature was increased to 780 °C and kept for 18 h with a temperature increasing rate of 3 °C/min and an oxygen introducing rate of 4 m³/h. The finally prepared nickel-rich layered oxide material had an approximate chemical formula of LiNi_{0.874}Sr_{0.0045}Co_{0.058}Al_{0.015}Mn_{0.0388}Zr_{0.0078}W_{0.0019}O₂.

The nickel-rich layered oxide material prepared in this Comparative Example was characterized, and the results showed that the material had a morphology of a spherical secondary particle, a median particle size D₅₀ of 12.5 µm, and a specific surface area of 0.42 m²/g. The Zr and W elements mainly exhibited island segregation at the surface of the spherical secondary particle, and only few Zr and W elements were detected in the primary particle.

### Performance and effect evaluation

The lattice microstrain and the electrochemical performance of the oxide materials prepared in Examples 1 to 7 and Comparative Examples 1 to 3 were evaluated as follows.

### 1) Lattice microstrain

The oxide materials prepared in Example 1 and Comparative Examples 1 to 3 were refined by Le Bail method to obtain Williamson-Hall plots as shown in FIG. 4. FIG. 4 shows Williamson-Hall plots of oxide materials prepared in Example 1 and Comparative Examples 1 to 3 provided in the present application. Both the refinement of the crystal size and the microstrain (ε) of the lattice can cause broadening of the diffraction peak in the powder XRD spectrum. However, the influences of the grain size and of the microstrain can be separated using the Williamson-Hall equation, which can be summarized as: D·cosθ = a + b·sin, wherein a and b are constant factors, D is the full width at half maximum (FWHM) of the diffraction peak in the powder XRD spectrum, and θ is half of the diffraction angle. According to the Scherrer equation, the broadening of the diffraction peak caused by the grain size is in direct proportion to 1/cosθ, while the broadening caused by the microstrain of the structure Γ = 4·ε·tanθ, which is in direct proportion to tanθ. In view of the above, the slope of the Williamson-Hall plot is in direct proportion to the microstrain of the lattice in the sample, while the intercept of the Williamson-Hall plot is related to the grain size. Therefore, it can be seen that as compared to Comparative Examples 1, 2, and 3, the slope of the Williamson-Hall plot of the oxide material obtained in Example 1 was lower, suggesting that the oxide material in Example 1 had a lower lattice microstrain.

Moreover, the lattice microstrain ε can be calculated by the lattice spacing deviation, where ε=Δd/d. The specific calculation results of the lattice microstrain of the oxide materials prepared in Examples 1 to 7 and Comparative Examples 1 to 3 were shown in Table 1.

**Table 1**

| | Lattice microstrain (%) |
|---|---|
| Example 1 | 0.14 |
| Example 2 | 0.05 |
| Example 3 | 0.08 |
| Example 4 | 0.14 |
| Example 5 | 0.19 |
| Example 6 | 0.16 |
| Example 7 | 0.22 |
| Comparative Example 1 | 0.32 |
| Comparative Example 2 | 0.30 |
| Comparative Example 3 | 0.30 |

It can be seen from Table 1 that as compared to Comparative Examples 1 to 3, the nickel-rich layered oxide materials obtained in Examples 1 to 7 had lower lattice microstrain, all of which were less than 0.25 %, suggesting that the structure stabilities of the materials were significantly improved.

### 2) Electrochemical performance

The electrochemical performances of the oxide materials prepared in Examples 1 to 7 and Comparative Examples 1 to 3 as the cathode material of the lithium secondary battery were tested in lithium secondary button cells. The specific method for preparing the lithium secondary cell and its cathode plate was as follows. The prepared cathode material powder was mixed with acetylene black and polyvinylidene fluoride at a mass ratio of 90:5:5, an appropriate amount of N-methylpyrrolidone was added as a dispersant, and then ground into a slurry. Then, the slurry was uniformly coated on an aluminum foil, and vacuum-dried at 120 °C for 10 h. The dried electrode plate was rolled by a roller, and then the aluminum foil was cut by a slicer into a round electrode plate with a diameter of 1.3 cm. The loading amount of the active material was controlled at about 12 ±0.2 mg/cm². A half-cell was assembled in a glove box with an atmosphere of argon, a moisture partial pressure of ≤0.1ppm, and an oxygen partial pressure of ≤0.1ppm, with lithium metal as the counter electrode, and 1 M LiPF₆ (EC/DMC, with a volume ratio of 1:1:1) solution as the electrolyte. CR2032 button cell was assembled, and then charged and discharged in a constant-current charge and discharge mode at room temperature, with a voltage in range of 2.5 V to 4.3 V and a current density of 60 mA/g (0.3 C rate) for 100 cycles of charge and discharge.

In order to analyze the thermal stability of the prepared material, the assembled cell of the prepared material was charged to 4.3 V, and then disassembled in the glove box filled with argon to take out the cathode plate. The cathode plate was washed several times with DMC solution, and vacuum-dried. Thereafter, the active material was recovered from the plate, placed in a sample crucible of a differential scanning calorimeter, and subjected to a DSC thermal analysis with atmosphere of N₂ atmosphere and a temperature increasing rate of 5 °C/min. The heat release and the location of the exothermic peak of the materials were compared.

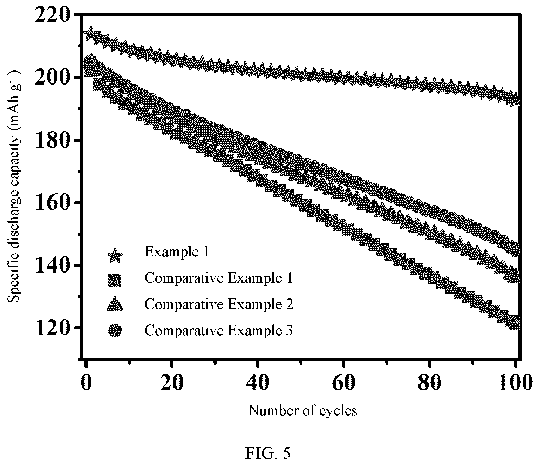

The cycle performances of the oxide materials prepared in Example 1 and Comparative Examples 1 to 3 tested in the lithium secondary cell were shown in FIG. 5. FIG. 5 shows comparison of the cycle performances of the oxide materials prepared in Example 1 and Comparative Examples 1 to 3 provided in the present application tested in the lithium secondary cell. The charge specific capacity in the first cycle, the discharge specific capacity in the first cycle, the coulombic efficiency in the first cycle, the capacity retention rate after 100 cycles, and DSC test data of the oxide materials prepared in Examples 1 to 7 and Comparative Examples 1 to 3 tested in the lithium secondary cell were shown in Table 2.

**Table 2**

| | charge specific capacity in first cycle (mAh/g) | discharge specific capacity in first cycle (mAh/g) | coulombic efficiency in first cycle (%) | capacity retention rate after 100 cycles (%) | temperature at exothermic peak in DSC test (°C) | Heat release in DSC test (J/g) |
|---|---|---|---|---|---|---|
| Example 1 | 236.6 | 213.9 | 90.4 | 90.1 | 230.3 | 49.83 |
| Example 2 | 237.3 | 210.0 | 88.5 | 89.5 | 242.7 | 37.07 |
| Example 3 | 238.6 | 218.3 | 91.5 | 90.4 | 226.4 | 50.53 |
| Example 4 | 231.9 | 212.0 | 91.4 | 92.6 | 234.5 | 46.05 |
| Example 5 | 235.1 | 208.1 | 88.5 | 92.2 | 243.6 | 37.71 |
| Example 6 | 250.3 | 223.0 | 89.1 | 89.6 | 228.7 | 56.84 |
| Example 7 | 254.4 | 227.7 | 89.5 | 88.5 | 224.7 | 58.49 |
| Comparative Example 1 | 237.0 | 202.2 | 85.3 | 60.1 | 209.5 | 61.56 |
| Comparative Example 2 | 230.9 | 204.8 | 88.7 | 66.5 | 215.3 | 59.37 |
| Comparative Example 3 | 237.8 | 205.0 | 86.2 | 70.7 | 218.8 | 59.95 |

It can be seen from Table 2 that as compared to Comparative Examples 1 to 3, the nickel-rich layered oxide materials obtained in Examples 1 to 7 had better cycle performance, higher temperature at exothermic peak, and lower heat release tested in the lithium secondary cell, suggesting that the safety of the materials were significantly improved.

The above-described are only preferable embodiments of the present application. It should be understood by those of ordinary skill in the art that various modifications and improvements can be made without departing from the concept of the present application, and all fall within the protection scope of the present application.

## Claims

1. A nickel-rich layered oxide material, having a crystal structure with a hexagonal space group R-3m and a lattice microstrain of ≤0.25%.

2. The nickel-rich layered oxide material of claim 1, wherein the nickel-rich layered oxide material has a formula of LiNiₓAₐB_{b}C_{c}D_{d}O₂, wherein Ni is +3 valent, A is a +2 valent metal cation, B is a +3 valent metal cation, C is a +4 valent metal cation, D is a +5 or more valent metal cation, 0.8≤x< 1, a>0, b>0, c>0, d≥0, and x+a+b+c+d=1;
preferably, the nickel-rich layered oxide material is in form of particles; and
preferably, among all types of metal cations comprised in B, C and D, at least two types of metal cations have greater concentrations at a surface of a primary particle of the nickel-rich layered oxide material than at a center of the primary particle.

3. The nickel-rich layered oxide material of claim 2, wherein A is one or more of Mg²⁺, Ni²⁺, or Sr²⁺; B is one or more of Al³⁺, Co³⁺, Ga³⁺, Y³⁺, La³⁺, or Yb³⁺; C is one or more of Mn⁴⁺, Zr⁴⁺, Ti⁴⁺, Sn⁴⁺, or Ce⁴⁺; and D is one or more of V⁵⁺, Nb⁵⁺, Sb⁵⁺, Ta⁵⁺, Mo⁶⁺, or W⁶⁺.

4. The nickel-rich layered oxide material of any one of claims 1 to 3, satisfying at least one of the following conditions:
a particle size D₅₀ of the nickel-rich layered oxide material is 2 µm to 20 µm;
a specific surface area of the nickel-rich layered oxide material is 0.2 m²/g to 2 m²/g; or
a morphology of the nickel-rich layered oxide material is a primary particle or a spherical secondary particle.

5. A method for preparing a nickel-rich layered oxide material, comprising steps of:
a) mixing a solution I, a solution II, sodium hydroxide, and a complexant and subjecting them to a complexation and precipitation reaction, during which amounts of the sodium hydroxide and the complexant are controlled such that the mixture system is kept at a pH level of 10 to 13, to obtain a hydroxide precipitate,
wherein the solution I comprises a nickel source compound and water, the solution II comprises a first metal source compound and water, the first metal source compound is at least one of a C source compound or a D source compound, or a mixture of at least one of a C source compound or a D source compound and at least one of a A source compound or a B source compound, the A source compound is a water-soluble metal salt corresponding to a +2 valent metal cation, the B source compound is a water-soluble metal salt corresponding to a +3 valent metal cation, the C source compound is a water-soluble metal salt corresponding to a +4 valent metal cation, and the D source compound is a water-soluble metal salt corresponding to a +5 or more valent metal cation;
b) mixing the hydroxide precipitate, a lithium source compound, and a second metal source compound to obtain a mixture material,
wherein the second metal source compound is one or more of the A source compound, the B source compound, the C source compound, or the D source compound;
c) subjecting the mixture material to a multi-step calcination under an oxygen-containing atmosphere to obtain the nickel-rich layered oxide material having a crystal structure with a hexagonal space group R-3m and a lattice microstrain of ≤0.25%.

6. The method of claim 5, wherein in the step a), the solution I has a metal ion concentration of 1 mol/L to 5 mol/L, and the solution II has a total metal ion concentration of 0.5 mol/L to 5 mol/L.

7. The method of claim 5 or 6, wherein in the step a), the sodium hydroxide satisfies at least one of the following conditions:
the sodium hydroxide is mixed in form of an aqueous solution of the sodium hydroxide, or
the aqueous solution of the sodium hydroxide has a concentration of 0.5 mol/L to 4 mol/L.

8. The method of any one of claims 5 to 7, wherein in the step a), the complexant satisfies at least one of the following conditions:
the complexant is one or more of ammonium hydroxide, ethylenediamine tetraacetic acid, or ethylenediamine; or
the complexant is mixed in form of an aqueous solution of the complexant.

9. The method of claim 8, wherein in the step a), the aqueous solution of the complexant has a concentration of 0.5 mol/L to 10 mol/L.

10. The method of any one of claims 5 to 9, wherein in the step a), the complexation and precipitation reaction satisfies at least one of the following conditions:
the complexation and precipitation reaction is performed under stirring with a stirring speed of 200 r/min to 1000 r/min;
the complexation and precipitation reaction is performed at a temperature of 30 °C to 70 °C; or
the complexation and precipitation reaction is performed for a period of 10 h to 50 h.

11. The method of any one of claims 5 to 10, wherein in the step c), the multi-step calcination specifically comprises:
i) increasing a temperature from an ambient temperature to a first calcination temperature to perform a first thermostatic calcination,
wherein the first calcination temperature is 300 °C to 600 °C, the temperature is increased to the first calcination temperature at an increasing rate of 1 °C/min to 6 °C/min, and the first thermostatic calcination is performed for a period of 4 h to 10 h;
ii) further increasing the temperature to a second calcination temperature to perform a second thermostatic calcination,
wherein the second calcination temperature is 700 °C to 1000 °C, the temperature is increased to the second calcination temperature at a rate of 1 °C/min to 6 °C/min, and the second thermostatic calcination is performed for a period 1 h to 5 h;
iii) regulating the temperature to a third calcination temperature to perform a third thermostatic calcination,
wherein the third calcination temperature is 700 °C to 900 °C and is lower than or equal to the second calcination temperature, the temperature is regulated to the third calcination temperature at a rate of 0 °C/min to 10 °C/min, and the third thermostatic calcination is performed for a period of 10 h to 20 h.

12. The method of claim 11, wherein in the step c), in the multi-step calcination, oxygen is continuously introduced into an equipment for the calcination to provide the oxygen-containing atmosphere required for the calcination, an oxygen introducing rate in the step i) is 0.5 m³/h to 5 m³/h, an oxygen introducing rate in the step ii) is 0.5 m³/h to 5 m³/h, and an oxygen introducing rate in the step iii) is 0.5 m³/h to 5 m³/h.

13. The method of claim 5, wherein the first metal source compound comprises the A source compound, the B source compound, the C source compound, and optionally the D source compound.

14. The method of claim 5, wherein the A source compound, the B source compound, the C source compound, or the D source compound in the second metal source compound is a carbonate, a hydroxide, or an oxide of the +2 valent metal cation, the +3 valent metal cation, the +4 valent metal cation, or the +5 or more valent metal cation.

15. A lithium ion secondary battery, comprising a cathode material comprising the nickel-rich layered oxide material of any one of claims 1 to 4, or the nickel-rich layered oxide material prepared by the method of any one of claims 5 to 14.

16. An electrical device, equipped with the lithium ion secondary battery of claim 15.
